# EUROPEAN PATENT APPLICATION

(11) **EP 4 831 906 A1**
(43) Date of publication of application: **28.10.2026**
(21) Application number: 25841483.8
(22) Date of filing: 19.06.2025
(51) Int. Cl.: G06Q 50/40, B60L 53/68, B60L 53/66, B60L 53/67

(54) **SERVER FOR PROVIDING INFORMATION ABOUT CHARGING ZONE, AND OPERATING METHOD THEREOF**

(30) Priority: 19.07.2024 KR 20240095553
(71) Applicant: LG Energy Solution, Ltd., Seoul 07335 (KR)
(72) Inventor: CHAE, Min Young, Daejeon 34122 (KR); CHO, Jae Young, Daejeon 34122 (KR); KIM, Joo Sung, Daejeon 34122 (KR)
(74) Representative: Goddar, Heinz J.
(86) International application number: PCT/KR2025/008479
(87) International publication number: WO 2026/019086

(57) **Abstract**

According to an embodiment disclosed in this document, a server may include an acquisition unit configured to acquire usage reference information from at least some of chargers in charging zones and charging targets corresponding to the chargers, a determination unit configured to determine whether the charging target uses the charging zone based on the usage reference information, and a generation unit configured to generate charging zone state information based on a result of determining whether the charging target uses the charging zone.

## Description

### TECHNICAL FIELD

### Cross-reference to Related Applications

This application claims priority from Korean Patent Application No. 10-2024-0095553, filed on July 19, 2024, the disclosure of which is incorporated by reference herein.

### Technical Field

Embodiments disclosed in this document relate to a server for providing information about a charging zone and an operating method thereof.

### BACKGROUND ART

As environmental issues become more prominent, the supply of electric vehicles is continuously increasing, and accordingly, the supply of charging devices for charging electric vehicles is also continuously increasing.

However, most charging devices require a considerable amount of time to charge the electric vehicle, and accordingly, electric vehicle users often leave the location where the charging device is placed and move to another place while the vehicle is connected to the charging device to do other things, and the vehicle is often left while being connected to the charging device.

As a result, there is a problem in that even when charging of the vehicle is completed, the vehicle is left occupying the charging device without moving the vehicle to another location, so that other vehicles cannot use the charging device.

In addition, conventionally, information on whether the charging device is currently charging has been provided to electric vehicle users, and when a vehicle that has completed charging is left occupying the charging device, a notification is provided to other users that the charging device is in an uncharged state. In such cases, there is a problem that many electric vehicle users experience inconvenience because other users mistakenly believe that the charging device is currently available and only find out after visiting the charging station that the charging device is still unavailable.

### DISCLOSURE OF THE INVENTION

### TECHNICAL PROBLEM

Embodiments disclosed in this document provide a server for providing information on electric vehicle charging zones in real time and an operating method thereof.

Embodiments disclosed in this document provide a server for generating and providing information on electric vehicle charging zones using a small amount of resources and an operating method thereof.

The technical objectives of the embodiments disclosed in the document are not limited to the technical problems mentioned above, and other technical problems not mentioned will be clearly understood by those skilled in the art from the descriptions below.

### TECHNICAL SOLUTION

A server according to an embodiment disclosed in this document includes an acquisition unit configured to acquire usage reference information from at least some of chargers in charging zones and charging targets corresponding to the chargers, a determination unit configured to determine whether the charging target uses the charging zone based on the usage reference information, and a generation unit configured to generate charging zone state information based on a result of determining whether the charging target uses the charging zone, and the usage reference information includes at least some of connection state information on whether the charging target is connected to the charger, charging state information, and charging target speed information.

In the server according to an embodiment disclosed in this document, the usage reference information may further include distance information corresponding to a distance between the charger and the charging target.

In the server according to an embodiment disclosed in this document, the determination unit may be configured to determine that the charging target is occupying the charging zone when the distance information is less than threshold distance information and the charging state information in which a charging start time is before a charging end time is acquired.

In the server according to an embodiment disclosed in this document, the determination unit may be configured to determine that the charging target is charging in the charging zone when the distance information is less than the threshold distance information and the charging state information in which the charging start time is after the charging end time is acquired.

The server according to an embodiment disclosed in this document may further include a provision unit configured to provide exit guidance information for causing the charging target to exit the charging zone to an occupation user terminal corresponding to the charging target when it is determined that the charging target is occupying the charging zone.

In the server according to an embodiment disclosed in this document, the determination unit may be configured to determine that the charging target is occupying the charging zone (i) when charging end information is acquired as the charging state information in a state where a connection signal between the charging target and the charger is acquired as the connection state information, or (ii) when the charging target speed information is less than threshold speed information in a state where a disconnection signal between the charging target and the charger is acquired as the connection state information.

In the server according to one embodiment disclosed in this document, the determination unit may be configured to determine that the charging target is charging in the charging zone when charging progress information is acquired as the charging state information in a state where a connection signal between the charging target and the charger is acquired as the connection state information.

The server according to an embodiment disclosed in this document may further include a provision unit configured to provide exit guidance information for causing the charging target to exit the charging zone to an occupation user terminal corresponding to the charging target when it is determined that the charging target is occupying the charging zone.

An operating method of a server according to an embodiment disclosed in this document includes acquiring usage reference information from at least some of chargers in charging zones and charging targets corresponding to the chargers, determining whether the charging target uses the charging zone based on the usage reference information, and generating charging zone state information based on a result of determining whether the charging target uses the charging zone, and the usage reference information includes at least some of connection state information on whether the charging target is connected to the charger, charging state information, and charging target speed information.

In the operating method of a server according to an embodiment disclosed in this document, the usage reference information may further include distance information corresponding to a distance between the charger and the charging target.

In the operating method of a server according to an embodiment disclosed in this document, in the determining of whether the charging target uses the charging zone, it may be determined that the charging target is occupying the charging zone when the distance information is less than threshold distance information and the charging state information in which a charging start time is before a charging end time is acquired.

In the operating method of a server according to an embodiment disclosed in this document, in the determining of whether the charging target uses the charging zone, it may be determined that that the charging target is charging in the charging zone when the distance information is less than the threshold distance information and the charging state information in which charging start time is after the charging end time is acquired.

The operating method of a server according to an embodiment disclosed in this document may further include, after the determining of whether the charging target uses the charging zone, providing exit guidance information for causing the charging target to exit the charging zone to an occupation user terminal corresponding to the charging target when it is determined that the charging target is occupying the charging zone.

In the operating method of a server according to an embodiment disclosed in this document, in the determining of whether the charging target uses the charging zone, it may be determined that the charging target is occupying the charging zone (i) when charging end information is acquired as the charging state information in a state where a connection signal between the charging target and the charger is acquired as the connection state information, or (ii) when the charging target speed information is less than threshold speed information in a state where a disconnection signal between the charging target and the charger is acquired as the connection state information.

In the operating method of a server according to an embodiment disclosed in this document, in the determining of whether the charging target uses the charging zone, it may be determined that the charging target is charging in the charging zone when charging progress information is acquired as the charging state information in a state where a connection signal between the charging target and the charger is acquired as the connection state information.

The operating method of a server according to an embodiment disclosed in this document, after the determining of whether the charging target uses the charging zone, may further include providing exit guidance information for causing the charging target to exit the charging zone to an occupation user terminal corresponding to the charging target when it is determined that the charging target is occupying the charging zone in an uncharged state.

### ADVANTAGEOUS EFFECTS

The server according to the embodiments disclosed in this document and an operating method thereof can provide information about electric vehicle charging zones in real time.

The server according to the embodiments disclosed in this document and the operating method thereof can generate and provide information about electric vehicle charging zones using fewer resources.

In addition, various effects that are directly or indirectly identified through this document can be provided.

### BRIEF DESCRIPTION OF THE DRAWINGS

FIG. 1 is a diagram illustrating a server according to an embodiment disclosed in this document.
FIG. 2 is a diagram illustrating a server according to an embodiment disclosed in this document.
FIG. 3 is a flowchart illustrating an operating method of the server according to an embodiment disclosed in this document.
FIG. 4 is a diagram illustrating an operating method of the server according to an embodiment disclosed in this document.
FIG. 5 illustrates a computing system executing an operating method of a server according to an embodiment disclosed in this document.

### MODE FOR CARRYING OUT THE INVENTION

Hereinafter, various embodiments of the present invention are described with reference to the accompanying drawings. However, this is not intended to limit the present invention to a specific embodiment, but should be understood to include various modifications, equivalents, and/or alternatives of the embodiments of the present invention.

In this document, a singular form of a noun corresponding to an item may include one item or a plurality of items unless the relevant context clearly indicates otherwise. In this document, each of phrases "A or B", "at least one of A and B", "at least one of A or B", "A, B, or C", "at least one of A, B, and C", and "at least one of A, B, or C" may include any one of the items listed together in the corresponding phrase among the phrases, or all possible combinations thereof. Terms such as "first", "second", "firstly", "secondly," may be used merely to distinguish one component from another component and do not limit the components in any other respect (e.g., importance or order). When a component (e.g., a first component) is referred to as being "connected," or "coupled" to another component (e.g., a second component), with or without the terms "functionally" or "communicatively", it means that a component can be connected to another component directly (e.g., in a wired manner), wirelessly, or through a third component.

Each of the components (e.g., modules or programs) described described in this document may include a single or plurality of entities. According to various embodiments, one or more of the components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

The terms "module" or "... unit" used in this document may include units implemented in hardware, software, or firmware, and may be used interchangeably with terms such as logic, logic block, component, or circuit. A module may be an integrated part, or a minimum unit of the component that performs one or more functions, or a part thereof. For example, according to an embodiment, a module may be implemented in the form of an application-specific integrated circuit (ASIC).

Various embodiments of this document may be implemented as software (e.g., a program or application) containing one or more instructions stored in a machine-readable storage medium (e.g., a memory). For example, a processor of the device may call at least one instruction from a storage medium and execute the at least one instruction. This enables the device to operate to perform at least one function in accordance with the called instruction. The one or more instructions may include code generated by a compiler or executable by an interpreter. The machine-readable storage medium may be provided in the form of a non-transitory storage medium. Here, "non-transitory" simply means that the storage medium is a tangible device and does not contain signals (e.g., electromagnetic waves). This term does not distinguish between cases where data is stored semi-permanently and cases where data is stored temporarily.

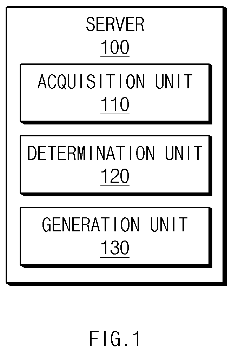

FIG. 1 is a diagram illustrating an example of the configuration of a server according to an embodiment disclosed in this document.

Referring to FIG. 1, a server 100 may include an acquisition unit 110, a determination unit 120, and a generation unit 130. However, it is not limited thereto, and some components may be omitted from the server 100, or other general-purpose components may be additionally included in the server 100.

The acquisition unit 110 according to an embodiment disclosed in this document may acquire usage reference information for determining whether a charging zone is in use from at least some of chargers in the charging zones and charging targets corresponding to the chargers.

According to an embodiment, the charging target may be a moving object that receives power from the charger, such as an electric vehicle. For reference, the charging target corresponding to the charger may be an electric vehicle that is currently connected to the charger, has a history of being connected, or is located in the charging zone corresponding to the charger.

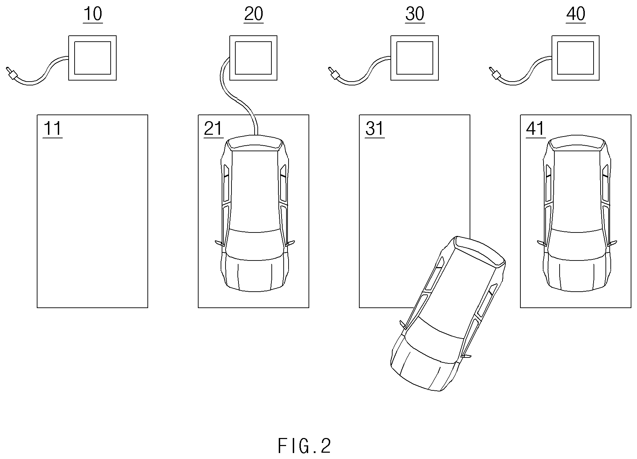

To aid understanding, referring to FIG. 2 further, chargers 10, 20, 30, and 40, charging zones 11, 21, 31, and 41, and charging targets (e.g., electric vehicles) may be identified. Specifically, it can be confirmed that, in the case of the charger 10, the charging target is not using the corresponding charging zone 11, whereas in the case of the chargers 20, 30 and 40, the charging target is using (charging in progress or occupying the charging zone) the corresponding charging zone 11. In addition, it can be confirmed that, in the case of the charger 20, the charging target is charging, whereas in the case of the chargers 30 and 40, the charging target is occupying the charging zone 31 and 41 in an uncharged state. For reference, in FIG. 2, a charging cable of the charger 40 is shown as being disconnected from the charging target, indicating that the charging target is currently occupying the charging zone, but it is not limited thereto. For example, even if the charging cable of the charger 40 is connected to the charging target, when the charging target is not currently charging, the charging target corresponds to a state in which the charging zone is being occupied.

In addition, the usage reference information may include at least some of connection state information on whether the charging target is connected to the charger (e.g., information on whether the charging target is connected/disconnected to/from the charger), charging state information (e.g., information on whether the charging target is charging), and charging target speed information (e.g., moving speed information of the charging target).

According to an embodiment, the usage reference information may further include distance information corresponding to a distance between the charger and the charging target.

According to an embodiment, when distance information is generated as a distance sensor (e.g., an IR sensor) senses the distance to an object (e.g., a charging target) approaching the charger in a state where the distance sensor is mounted on the charger, the charger may transmit the corresponding distance information to the acquisition unit 110. For reference, distance information may be information on a distance between the charger and the target to be charged itself, but is not limited thereto. For example, a charger may determine the presence or absence of a charging target within a charging zone based on the distance between the charger and the charging target, generate the determination result as distance information, and transmit the determination result to the acquisition unit 110. In addition, the charger may directly transmit the distance information to the acquisition unit 110, but is not limited thereto. For example, the charger may transmit the corresponding distance information to a server of a business operator managing the charger, and the acquisition unit 110 may acquire the corresponding distance information from the server of the charger business operator.

The determination unit 120 according to an embodiment disclosed in this document may determine whether the charging target uses the charging zone based on the usage reference information.

According to an embodiment, the charging state information may include information on a charging start time, a charging end time, and a charging station ID.

According to an embodiment, the charging state information may further include information on a charger type.

According to an embodiment, when the distance information is less than threshold distance information and charging state information in which the charging start time is before the charging end time is acquired, the determination unit 120 may determine that the charging target is occupying the charging zone. For example, when the most recent charging start time (e.g., June 2, 2024, 9:20 AM) acquired from the charger is before the most recent charging end time (e.g., June 2, 2024, 11:20 AM), charging through the corresponding charger corresponds to a state in which charging has already been completed. In this case, when the distance between the charger and the charging target (e.g., 2 m) is less than the threshold distance information (e.g., 3 m), the charging target (e.g., the electric vehicle) is located in the charging zone in a state where charging is complete, and therefore, the determination unit 120 may determine that the charging target is occupying the charging zone.

According to an embodiment, when the distance information is less than the threshold distance information and charging state information in which the charging start time is after the charging end time is acquired, the determination unit 120 may determine that the charging target is charging in the charging zone. For example, when the most recent charging start time (e.g., June 2, 2024, 1:00 PM) acquired from the charger is after the most recent charging end time (e.g., June 2, 2024, 11:20 AM), the charging through the corresponding charger corresponds to a state in which the charging is in progress. In this case, when the distance between the charger and the charging target (e.g., 2 meters) is less than the threshold distance information (e.g., 3 meters), the charging target (e.g., an electric vehicle) corresponds to a case in which charging is in progress and the charging target is located in the corresponding charging zone, and thus, the determination unit 120 may determine that the charging target is charging in the charging zone.

According to an embodiment, when the distance information is greater than or equal to the threshold distance information, the determination unit 120 may determine that the charging target is not using the charging zone. For example, when the distance between the charger and the charging target (e.g., 5 meters) is greater than or equal to the threshold distance information (e.g., 3 meters), the charging target (e.g., the electric vehicle) corresponds to a case in which the charging target is located outside the corresponding charging zone, and thus, the determination unit 120 may determine that the corresponding charging zone is not being used.

For reference, in the above description, it has been described that the threshold distance information has a single value (e.g., 3 meters), but this is only an example for helping to understand, and is not limited thereto. For example, the threshold distance information may be set to correspond to a shape of each charging zone where the charger is installed. For example, when the front is 0 degrees based on the distance sensor mounted on the charger, the threshold distance information may be set to 2 meters for the direction section from -90 degrees or more to less than 0 degrees, and the threshold distance information may be set to 2.5 meters for the direction section from 0 degrees or more to less than 90 degrees. Alternatively, the threshold distance information for each azimuth of each distance sensor may be set to correspond to the shapes of the charging zones 11, 21, 31, and 41 illustrated in FIG. 2.

According to an embodiment, the determination unit 120 may determine whether the charging target is using the charging zone based on at least some of the connection state information, charging state information, and charging target speed information included in the usage reference information.

In this case, the usage reference information may be generated through the On Board Diagnostics (OBD) of the charging target (e.g., the electric vehicle). For example, the electric vehicle may detect whether the charger is connected or disconnected through the OBD and generate connection state information. Furthermore, the electric vehicle may detect whether charging is currently in progress through the OBD and generate charging state information. Furthermore, the electric vehicle may generate charging target speed information on a moving speed of the electric vehicle through the OBD. According to an embodiment, the charging target (e.g., the electric vehicle) may be equipped with a data collection device, and the data collection device may collect data of the charging target through a data port of the charging target. As an example, the data port of the charging target may include an OBD port, and the data collection device may be connected to the OBD port of the charging target. The data collection device may collect data of the charging target (e.g., whether the charger is connected or disconnected, whether charging is in progress, the moving speed of the charging target, etc.) from the OBD port through the Controller Area Network (CAN) communication standard as the usage reference information. The data collection device may then transmit the usage reference information to the acquisition unit.

According to an embodiment, the determination unit 120 may determine that the charging target is occupying the charging zone when charging end information is acquired as the charging state information in a state where a connection signal (coupling signal) between the charging target and the charger is acquired as the connection state information.

According to an embodiment, the determination unit 120 may determine that the charging target is occupying the charging zone when charging start information is not acquired as the charging states information within a preset time period in a state where the connection signal (coupling signal) between the charging target and the charger is acquired as the connection state information.

According to an embodiment, the determination unit 120 may determine that the charging target is occupying the charging zone when the charging target speed information is less than the threshold speed information in a state where a disconnection signal between the charging target and the charger is acquired as the connection state information. For example, the determination unit 120 may determine that the charging target is still occupying the charging zone without permission even after charging is complete when the charging target speed information (e.g., 0 km/h) is less than the threshold speed information (5 km/h) in a state where the charger is disconnected from the charging target.

According to an embodiment, the determination unit 120 may determine that the charging target is charging in the charging zone when charging progress information is acquired as the charging state information in a state where the connection signal between the charging target and the charger is acquired as the connection state information.

The generation unit 130 according to an embodiment disclosed in this document may generate charging zone state information, which is the result of determining whether the charging zone is being used.

Furthermore, the provision unit according to an embodiment disclosed in this document may provide charging zone state information to a user terminal.

Table 1 below corresponds to an example of the charging zone states information according to an embodiment disclosed in this document.

**[Table 1]**

| Charging station | Wirye Charging Station | | | |
|---|---|---|---|---|
| Charger | Charger 1 | Charger 2 | Charger 3 | Charger 4 |
| Charger type and whether it is in use | Fast/Charging | Slow/Being occupied after charging complete | Slow/Being occupied in uncharged state | Fast/waiting for charging |
| Occupied Time | 1 hour 10 minutes | 3 hours 45 minutes | 21 hours 34 minutes | |

Referring to Table 1, by referring to the charging zone state information, it is possible to check whether a plurality of charging zones each of which is available for each of chargers at a specific charging station (e.g., Wirye Charging Station) are currently being used.

However, the charging zone state information listed in Table 1 is merely an example to help understanding, and the remaining information (e.g., information on occupancy time, etc.) excluding information about whether the charging zone is in use may be provided to the user terminal without being included in the charging zone state information.

According to an embodiment, when it is determined that the charging target is occupying the charging zone, the provision unit may additionally provide exit guidance information to the user terminal (the occupation user terminal) corresponding to the charging target for causing the charging target to exit the charging zone.

For example, when it is assumed that a fine will be imposed if a fast charger occupies the corresponding charging zone for more than one hour, and a fine will be imposed if a slow charger occupies the corresponding charging zone for more than 14 hours, the provision unit may provide exit guidance information (e.g., alarm) to the occupation user terminal before the corresponding time has been exceeded so that the occupied user is not charged a fine, and may support other electric vehicle users to smoothly use the charging station. In addition, the provision unit may provide exit guidance information to the occupation user terminal after the corresponding time has been exceeded to induce the occupied user to exit the charging zone early, thereby enabling other electric vehicle users to smoothly use the charging station.

As an example, in a state where an owner of a specific electric vehicle with the data collection device connected to the OBD port has subscribed to a charging-related information provision service and has entered his or her vehicle information into the server through the charging information service application installed on his or her device, when the owner leaves his or her electric vehicle unattended in a charging zone corresponding to a fast charger for more than one hour, distance information between the electric vehicle and the fast charger (e.g., first usage reference information) may be less than the threshold distance information, and speed information of the electric vehicle (e.g., second usage reference information) may be less than the threshold speed information. In this situation, the determination unit may determine that the electric vehicle is occupying the charging zone based on at least some of the first usage reference information and the second usage reference information. Furthermore, the provision unit may provide exit guidance information to the terminal of the owner of the electric vehicle (i.e., the occupation user terminal) to support other electric vehicle users to smoothly use the charger.

For reference, in the above descriptions, the embodiment that provides the charging zone state information based on the usage reference information acquired from the charger and the embodiment that provides the charging zone state information based on the usage reference information acquired from the charging target have been described, respectively, but the operation of the server 100 according to an embodiment disclosed in this document is not limited to either of the above embodiments.

According to an embodiment, the determination unit 120 may acquire usage reference information from both the charger and the charging target, and determine whether the charging target is using the charging zone based on the usage reference information. For example, even when the distance information from the charger (3.1 meters) is greater than or equal to the threshold distance information (3 meters), when a connection signal (coupling signal) between the charging target and the charger is acquired as the connection state information and charging end information is acquired as the charging state information, the determination unit 120 may determine that the charging target is occupying the charging zone. As another example, if a connection signal (coupling signal) between the charging target and the charger is acquired as connection state information and the distance information from the charger (2.5 meters) is less than the threshold distance information, the determination unit 120 may determine that the charging target is occupying the charging zone if charging end information is not acquired from the charging target even when preset time has been exceeded

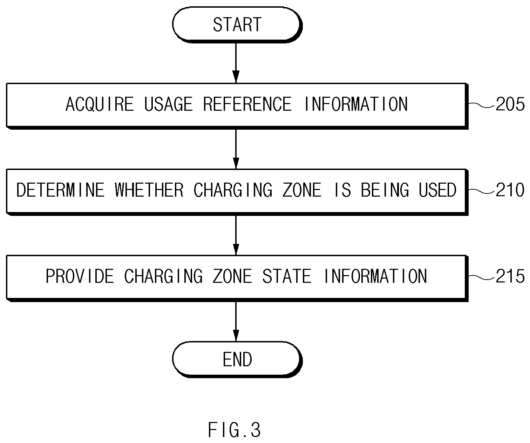

FIG. 3 is a flowchart illustrating an operating method of the server 100 according to an embodiment disclosed in this document.

Referring to FIG. 3, the operating method of the server 100 may include a step of acquiring usage reference information for determining whether a charging zone is in use from at least some of chargers in charging zones and charging targets corresponding to the chargers (205), a step of determining whether the charging target uses the charging zone based on the usage reference information (210), and a step of generating charging zone state information which is a result of determining whether the charging target uses the charging zone (215).

In this case, the usage reference information may include at least some of connection state information on whether the charging target is connected to the charger, charging state information, and charging target speed information. In the embodiment, the usage reference information may further include distance information corresponding to a distance between the charger and the charging target.

In step 210, the server 100 may determine whether the charging target is using the charging zone based on distance information. In the embodiment, when the distance information is less than the threshold distance information and the charging state information that indicates the charging start time is before the charging end time is acquired, the server 100 may determine that the charging target is occupying the charging zone. In the embodiment, when the distance information is less than the threshold distance information and the charging state information that indicates the charging start time is after the charging end time is acquired, the server 100 may determine that the charging target is charging in the charging zone. In the embodiment, the server 100 may determine that the charging target is occupying the charging zone (i) when charging end information is acquired as the charging status information in a state where a connection signal between the charging target and the charger is acquired as the connection state information, or (ii) when charging target speed information is less than threshold speed information in a state where a disconnection signal between the charging target and the charger is acquired as the connection status information. In the embodiment, the server 100 may determine that the charging target is charging in the charging zone when charging progress information is acquired as the charging status information in a state where the connection signal between the charging target and the charger is acquired as the connection state information.

After step 210, the server 100 may provide exit guidance information for causing the charging target to exit the charging zone to an occupation user terminal corresponding to the charging target when it is determined that the charging target is occupying the charging zone. In the embodiment, when it is determined that the charging target is occupying the charging zone in an uncharged state, the server 100 may provide exit guidance information for causing the charging target to exit the charging zone to the occupation user terminal corresponding to the charging target.

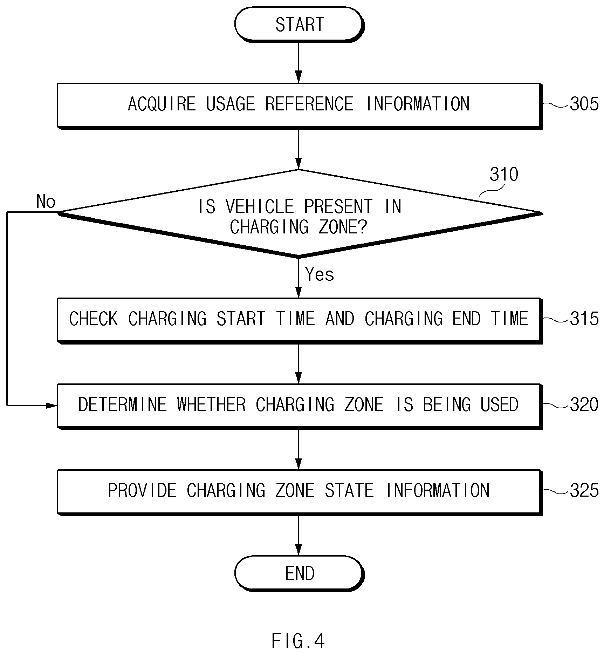

FIG. 4 is a flowchart illustrating an operating method of the server 100 according to another embodiment disclosed in this document.

In step 305, the server 100 may acquire usage reference information from a charger. In this time, the charger may use a distance sensor to generate distance information corresponding to the distance to the charging target and transmit the distance information to the server 100.

In step 310, the server 100 may determine whether a vehicle is present in the charging zone based on the usage reference information. If no vehicle is present in the charging zone, the server 100 may determine that the charging zone is available.

If the vehicle is present in the charging zone, at step 315, the server 100 may check the last charging start time and the last charging end time.

In step 320, the server 100 may determine whether the charging zone is in use based on the charging start time and the charging end time. If the charging start time is after the charging end time, the server 100 may determine that the charging target is currently charging in the charging zone. If the charging start time is before the charging end time, the server 100 may determine that the charging target is currently occupying the charging zone without permission.

In step 325, the server 100 may generate charging zone state information based on the result of determining whether the charging zone is in use.

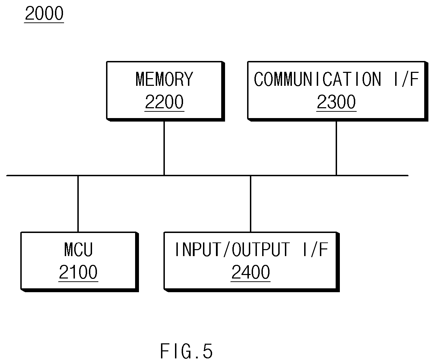

FIG. 5 shows a computing system 2000 that executes an operating method of a server according to an embodiment disclosed in this document.

Referring to FIG. 5, the computing system 2000 according to an embodiment disclosed in this document may include an MCU 2100, a memory 2200, a communication I/F 2300, and an input/output I/F 2400.

The MCU 2100 may be a processor that executes various programs stored in the memory 2200 and performs the functions of the server 100 described with reference to the above-described FIG. 1, or a processor that executes the operating method of the server 100 described with reference to FIGS. 3 and 4.

The memory 2200 may store various programs for determining whether the charging zone is in use.

A plurality of such memories 2200 may be provided as needed. The memory 2200 may be a volatile memory or a nonvolatile memory. The memory 2200 used as the volatile memory may be RAM, DRAM, SRAM, etc. The memory 2200 used as the nonvolatile memory may be ROM, PROM, EAROM, EPROM, EEPROM, flash memory, etc. The examples of the memories 2200 listed above are only examples and are not limited to these examples.

The input/output I/F 2400 may provide an interface that allows data to be transmitted and received by connecting an input device (not shown) such as a keyboard, mouse, or touch panel and an output device (not shown) such as a display with the MCU 2100.

The communication I/F 2300 is a configuration that can transmit and receive various data with the server, and may be various devices that can support wired or wireless communication. For example, it is possible to transmit and receive determination results on the state of a charging zone from a separately provided external server through the communication I/F 2300.

In this way, the operating method of the server 100 according to an embodiment disclosed in this document can be recorded in the memory 2200 and executed by the MCU 2100.

According to the operating method of the server 100 according to an embodiment disclosed in this document, there is an effect of enabling a quick determination using much fewer resources than the conventional method of analyzing an image obtained by photographing a charging zone to determine whether the charging zone is occupied.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an example of the technical idea disclosed in this document, and those skilled in the art to which the embodiments disclosed in this document pertain may make various modifications and variations without departing from the essential characteristics of the embodiments disclosed in this document. Accordingly, the embodiments disclosed in this document are intended to describe rather than limit the technical ideas of the embodiments disclosed in this document, and the scope of the technical ideas disclosed in this document is not limited by these embodiments. The scope of protection of the technical ideas disclosed in this document should be interpreted by the scope of the claims below, and all technical ideas within the equivalent scope should be interpreted as being included in the scope of rights of this document.

## Claims

1. A server comprising:
an acquisition unit configured to acquire usage reference information from at least some of chargers in charging zones and charging targets corresponding to the chargers;
a determination unit configured to determine whether the charging target uses the charging zone based on the usage reference information; and
a generation unit configured to generate charging zone state information based on a result of determining whether the charging target uses the charging zone,
wherein the usage reference information includes at least some of connection state information on whether the charging target is connected to the charger, charging state information, and charging target speed information.

2. The server of claim 1, wherein the usage reference information further includes distance information corresponding to a distance between the charger and the charging target.

3. The server of claim 2, wherein the determination unit is configured to determine that the charging target is occupying the charging zone when the distance information is less than threshold distance information and the charging state information in which a charging start time is before a charging end time is acquired.

4. The server of claim 3, wherein the determination unit is configured to determine that the charging target is charging in the charging zone when the distance information is less than the threshold distance information and the charging state information in which the charging start time is after the charging end time is acquired.

5. The server of claim 3, further comprising:
a provision unit configured to provide exit guidance information for causing the charging target to exit the charging zone to an occupation user terminal corresponding to the charging target when it is determined that the charging target is occupying the charging zone.

6. The server of claim 1, wherein the determination unit is configured to determine that the charging target is occupying the charging zone (i) when charging end information is acquired as the charging state information in a state where a connection signal between the charging target and the charger is acquired as the connection state information, or (ii) when the charging target speed information is less than threshold speed information in a state where a disconnection signal between the charging target and the charger is acquired as the connection state information.

7. The server of claim 6, wherein the determination unit is configured to determine that the charging target is charging in the charging zone when charging progress information is acquired as the charging state information in a state where a connection signal between the charging target and the charger is acquired as the connection state information.

8. The server of claim 6, further comprising:
a provision unit configured to provide exit guidance information for causing the charging target to exit the charging zone to an occupation user terminal corresponding to the charging target when it is determined that the charging target is occupying the charging zone.

9. A method comprising:
acquiring usage reference information from at least some of chargers in charging zones and charging targets corresponding to the chargers;
determining whether the charging target uses the charging zone based on the usage reference information; and
generating charging zone state information based on a result of determining whether the charging target uses the charging zone,
wherein the usage reference information includes at least some of connection state information on whether the charging target is connected to the charger, charging state information, and charging target speed information.

10. The method of claim 9, wherein the usage reference information further includes distance information corresponding to a distance between the charger and the charging target.

11. The method of claim 10, wherein, in the determining of whether the charging target uses the charging zone, it is determined that the charging target is occupying the charging zone when the distance information is less than threshold distance information and the charging state information in which a charging start time is before a charging end time is acquired.

12. The method of claim 11, wherein, in the determining of whether the charging target uses the charging zone, it is determined that the charging target is charging in the charging zone when the distance information is less than the threshold distance information and the charging state information in which the charging start time is after the charging end time is acquired.

13. The method of claim 11, further comprising:
after the determining of whether the charging target uses the charging zone, providing exit guidance information for causing the charging target to exit the charging zone to an occupation user terminal corresponding to the charging target when it is determined that the charging target is occupying the charging zone.

14. The method of claim 9, wherein, in the determining of whether the charging target uses the charging zone, it is determined that the charging target is occupying the charging zone (i) when charging end information is acquired as the charging state information in a state where a connection signal between the charging target and the charger is acquired as the connection state information, or (ii) when the charging target speed information is less than threshold speed information in a state where a disconnection signal between the charging target and the charger is acquired as the connection state information.

15. The method of claim 14, wherein, in the determining of whether the charging target uses the charging zone, it is determined that the charging target is charging in the charging zone when charging progress information is acquired as the charging state information in a state where a connection signal between the charging target and the charger is acquired as the connection state information.

16. The method of claim 14, further comprising:
after the determining of whether the charging target uses the charging zone, providing exit guidance information for causing the charging target to exit the charging zone to an occupation user terminal corresponding to the charging target when it is determined that the charging target is occupying the charging zone in an uncharged state.
